# EUROPEAN PATENT SPECIFICATION

(11) **EP 0 354 705 B1**
(45) Date of publication and mention of the grant of the patent: **13.09.1995**
(21) Application number: 89307781.8
(22) Date of filing: 31.07.1989
(51) Int. Cl.: G11B 27/10, G11B 27/02, G11B 27/32

(54) **Tape synchronising apparatus for tape reproducer**
Bandsynchronisierungsgerät für Bandwiedergabegerät
Appareil de synchronisation de bande pour reproducteur de bande

(30) Priority: 12.08.1988 JP 201099/88
(43) Date of publication of application: 14.02.1990
(73) Proprietor: SONY CORPORATION, Tokyo 141 (JP)
(72) Inventor: Sasho, Hidehiko c/o Sony Corporation, Shinagawa-ku Tokyo (JP)
(74) Representative: Ayers, Martyn Lewis Stanley

(56) References cited:
- EP-A- 0 077 692
- GB-A- 2 060 203
- GB-A- 2 187 324
- US-A- 4 532 560
- PATENT ABSTRACTS OF JAPAN vol. 7, no. 67 (P-184)(1212) 19 March 1983 & JP-A-57 210 491
- PATENT ABSTRACTS OF JAPAN vol. 10, no. 74 (P-439)(2131) 25 March 1986 & JP-A-60 211 674
- JOURNAL OF THE BRITISH KINEMATOGRAPH SOCIETY. vol. 61, no. 12, December 1979,LONDON GB pages 530 - 534; WHIFFIN: 'Q LOCK Time Control'

## Description

The present invention relates to a tape synchronising apparatus for a tape reproducer and, more particularly, to an apparatus adapted for use in an editing system.

In use of a video tape editing apparatus, during an editing operation, when a desired video image on a recorded original tape is to be inserted into a predetermined portion of an edit tape, for example, time codes respectively representing the beginning of the desired video image on the original tape (edit point on the original tape side) and the beginning of the predetermined portion of the edit tape (edit point on the edit tape side) are set by the operator on the editing apparatus. Then the tapes loaded in the individual tape reproducers are rewound by predetermined amounts from the designated time codes, and reproduction is started from such position. In this stage of the operation, a reference time counter is set at a value anterior to a certain target instant by a time corresponding to the rewind amount and serves to measure the reference time simultaneously with start of the tape transport motion.

While the time codes are detected from the individual tapes before arrival at the edit point, the difference between the detected time codes and the respective designated edit-point time codes is calculated, and then the motions of both the original tape and the edit tape are controlled (synchronised) in such a manner that each difference coincides with the remaining time of the reference time counter. When the time remaining on the reference time counter finally becomes zero, to indicate arrival of each tape at the designated edit point, the video recorder having the edit tape is placed in a recording mode to record the signal reproduced from the original tape.

Similarly, when video images obtained from the original tape are used for broadcasting, time codes are designated by the operator with regard to the desired time of reproduction and the beginning of a desired video image on the original tape. Then the original tape is rewound by a predetermined amount and begins to be reproduced at an instant anterior to the desired reproduction instant for a predetermined time. Synchronisation is performed in relation to the reference time counter so that proper reproduction can be started without any disorder at the desired reproduction instant.

Such a device is described in document GB-A-2,060,203 upon which the prior art portion of claim 1 is based.

In the initial stage of such synchronisation, the reproduced time code of each tape is delayed from the reference time before the original tape or the edit tape fully reaches the normal steady or constant speed thereof from the halted state. In some cases, for the purpose of cancelling such delay, there is present in the reference time counter a value further anterior to the value corresponding to the rewind amount of each tape.

The tape-speed rise time varies depending on the type of each video tape recorder/reproducer and even on individual apparatus even when the type is the same, and also on the length of each cassette tape (diameter of each reel), tape positions (beginning, middle and end), ambient conditions, total operation time period and so forth.

Therefore it has been necessary to select as the delay time required to account for the tape to run up to speed, the greatest time likely to be required having regard to the above factors. Accordingly, at the instant the tape speed has risen to the normal steady or constant speed, if the selected delay time is incorrect, the time code difference up to the edit point on the tape deviates from the remaining time in the reference time counter. Consequently the tape rewind amount needs to be sufficient for phase modification to attain synchronism. If the tape rewind amount is not sufficient, the fault may occur that complete phase modification fails to be achieved at the edit point.

It is also known from document GB-A-2,187,324 to provide a synchroniser learning certain ballistics of a tape recorder, e.g. its acceleration and transport delay, the parameters being stored in a memory and used to modify the commands of the synchroniser.

It is an object of the present invention to provide a novel tape synchronising apparatus capable of avoiding or reducing the above described difficulties encountered with the prior art.

According to one aspect of the present invention, there is provided a tape synchronising apparatus for a tape synchronising apparatus for a tape reproducer which uses a tape having information signals and time code signals tp recorded thereon and is adapted to reproduce said information signals and time code signals tp from said tape, said apparatus comprising:
means for generating and storing a first time code Tp corresponding to the time code recorded at the position of an edit point after which the reproduced information signal becomes effective;
means for rewinding said tape to a pre-roll-point advanced from said edit point by a predetermined amount tc;
means for generating a reference time code tr incremented in accordance with a reference time;
means for generating and storing a first reference time code Tr representative of said edit-point;
means for presetting said reference time code generating means to a second reference time code To advanced from said first reference time code Tr;
means for calculating, at an instant, the time difference ΔT, between a first remaining time Tp-tp, which is existent from the read time code tp at said instant to the first time code Tp corresponding to said edit-point, and a second remaining time Tr-tr existent from the reference time code tr generated by said reference time code generating means at said instant to said first reference time code Tr; and
means for executing tape speed control in response to said time difference ΔT; characterised in that
said second reference time code To is advanced from said first reference time code Tr by the sum of the time corresponding to said predetermined amount tc and an offset amount; in that
said instant at which said time difference ΔT is calculated is after the tape speed becomes constant; and by further comprising;
means for correcting said offset amount in response to the time difference ΔT generated from said calculating means.

This aspect of the invention also provides a tape synchronising apparatus which uses a tape having information signals and time code signals recorded thereon and is adapted to reproduce said information signals and time code signals from said tape, said apparatus comprising means for learning the time required for the tape reproducer to reach its required reproduction speed and means for adjusting the pre-roll tape prior to running the tape up to its required reproduction speed to account for the learnt time.

A second aspect of the invention provides a tape editing system comprising, in combination, a tape synchronising apparatus according to the first aspect of the invention and a pair of tape machines arranged to be controlled by that apparatus, one of the tape machines being operative to reproduce a required recorded segment from a tape on that machine and the other of the tape machines being operative to record that recorded segment on a tape thereon, the tape synchronising apparatus being operative to bring the two tape machines to an edit point at the start of the recorded segment in synchronism with one another.

A third aspect of the invention provides a tape synchronising method for a tape reproducer which uses a tape having information signals and time code signals tp recorded thereon and is adapted to reproduce said information signals and time code signals from said tape, said method comprising the steps of:
generating and storing a first time code Tp corresponding to the time code recorded at the position of an edit point after which the reproduced information signal becomes effective;
rewinding the tape to a pre-roll-point advanced from said edit point by a predetermined amount tc;
generating a reference time code tr incremented in accordance with a reference time;
generating and storing a first reference time code corresponding to said edit point;
presetting the generation of said reference time code to a second reference time code To advanced from said first reference time code Tr;
calculating, at an instant the time difference ΔT between a first remaining time Tp-tp, which is existent from the read time code tp at said instant to the first time code Tp corresponding to said edit point, and a second remaining time Tr-tr existent from the reference time code tr generated at said instant to said first reference time code Tr; and
executing tape speed control in response to said time difference ΔT; characterised in that
said second reference time code To is advanced from said first reference time code Tr by the sum of the time corresponding to said predetermined amount tc and an offset amount (DL); in that
the time difference ΔT is calculated at an instant (T1) after the tape speed becomes constant; and by further comprising
correcting said offset amount in response to the time difference ΔT generated in said calculating step.

The invention will be further described by way of non-limitative example with reference to the accompanying drawings, in which:-
Figure 1 is a block diagram of a video editing system to which an embodiment of the present invention is applied;
Figures 2 and 3 are time charts of phase modification for tapes; and
Figure 4 is a flow chart showing a learning algorithm for the delay in the tape-speed rise.

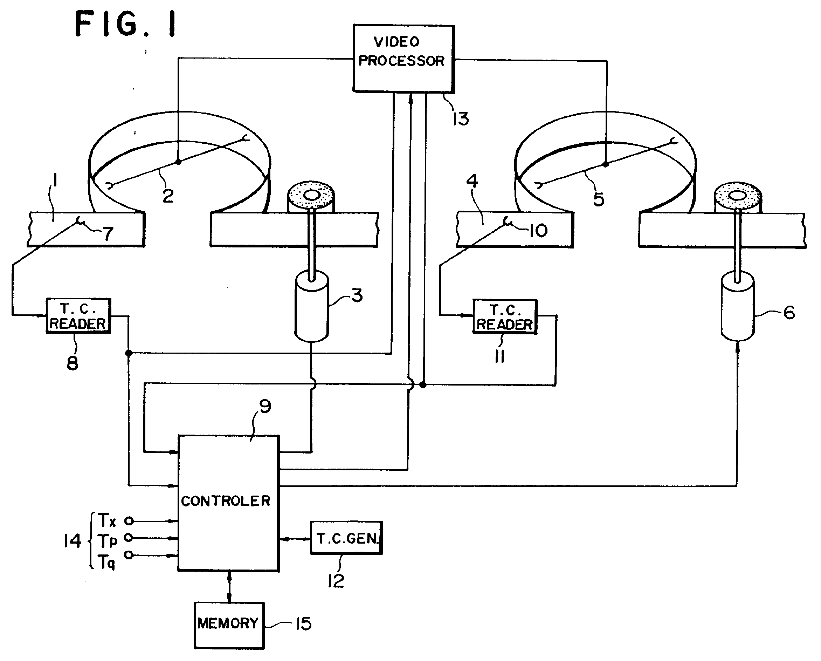

Figure 1 is a block diagram of an editing system employing two video tape recorders. An original tape 1 loaded in the reproducing-side VTR is wound around a rotary drum and is scanned for reproduction by a rotary head 2 while being driven forward by a capstan motor 3. The reproduced signal is fed via a video processing circuit 13 to a rotary head 5 in the recording-side VTR and then is recorded on an edit tape 4 driven forward by a capstan motor 6.

The time codes of individual frames recorded along the edges of the original tape 1 and the edit tape 4 are reproduced by means of reproducing heads 7 and 10 respectively and are supplied to a control circuit 9 after being read by time code readers 8 and 11. A reference time code generator 12 is provided to serve as a reference time counter and feeds each reference time code to the control circuit 9. The control circuit 9 receives, at its terminals 14, individual time codes, set by the operator, relative to a desired reproduction instant Tx, an edit point Tp (reproduction start point) on the original tape 1, and an edit point Tq (recording start point) on the edit tape 4. Such time codes are stored in a memory 15.

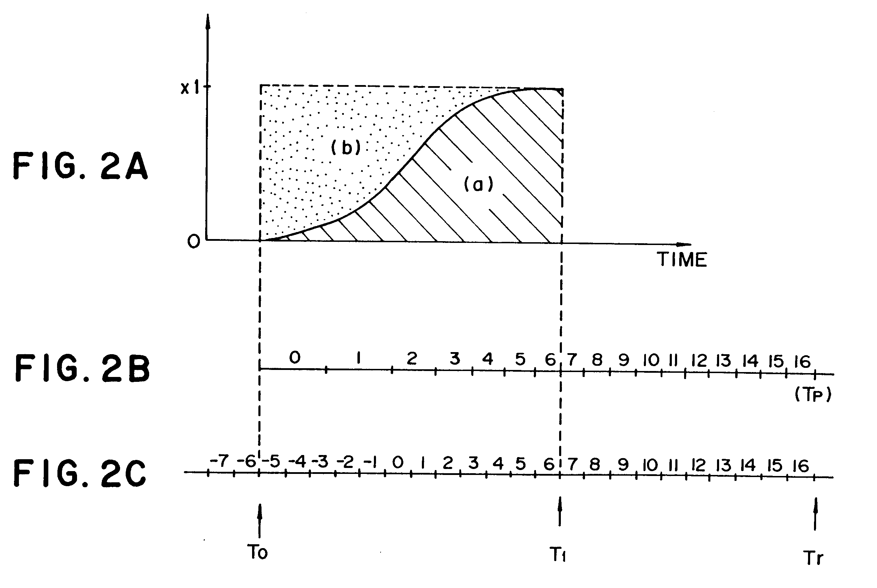

Figure 2 is a time chart showing a phase modifying operation per frame, wherein 2A stands for the speed of the original tape 1 on the reproducing side; 2B for reproduced time codes on the tape 1; and 2C for reference time codes obtained from the time code generator 12.

For example, a numerical value "16" is designated as the time code for the edit point Tp of the original tape 1. The original tape 1 is rewound by a predetermined amount (16 in this case) required for phase modification, and reproduction is started from the time code "0". Meanwhile a desired value, eg, "16", is designated as the target Tt of the reference time code, and the reference time code generator 12 is preset at a value "-5" which is anterior by the sum of "16" equivalent to the rewind amount and a delay amount "5" required for the tape to rise to its normal steady or constant speed.

When reproduction is started at an instant T0 the time code generator 12 counts incrementally frame by frame, and the tape speed rises to its normal steady state at an instant T1 of the time code "6" after the lapse of 11 frames, as illustrated in figure 2A. In this stage, the reproduced time code of the original tape 1 advances to "6". That is, the integral amount denoted by (a), the area under the curve, in figure 2A represents the advanced amount of the tape 1, and the remaining area (b) represents the amount delayed from the reference time. Since the delay amount (b) is canceled by the offset "05" of the preset value in the reference time code generator 12, the respective remainders of the reproduced time code and the reference time code to the targets are rendered substantially equal to each other at the instant T1.

After the instant T1, phase modification is performed and the speed control of the capstan motor 3 in the reproducing-side VTR is executed by the control circuit 9 in such a manner that the respective remainders become zero at the instant Tr. Meanwhile, in the recording-side VTR also, phase modification is performed with respect to the reference time code by exactly the same process, and the operation is switched to a recording mode at the edit point Tq.

The delay amount (b) shown in figure 2A is a value inherent in each video tape recorder and varies with the lapse of time. Therefore, the control circuit 9 incorporates means for executing a learning routine for the offset required to cancel the delay amount (b), thereby executing optimal control.

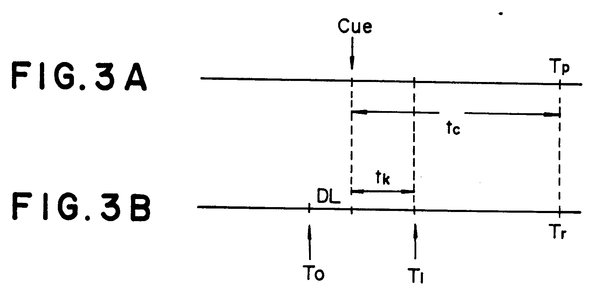

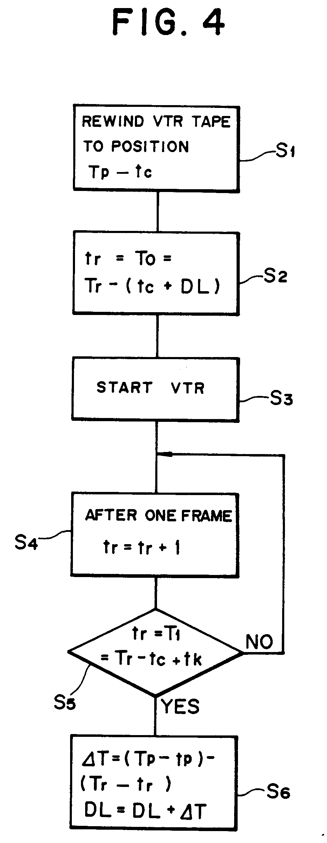

Figure 3 is a time chart showing a generalised graphic representation of the phase modification in figure 2, and figure 4 is a flow chart of an example of the learning routine. First in a step S1, the tape loaded in the reproducing-side VTR is rewound to a cue-up point Cue denoted by the time code of Tp (edit point) - tc (fixed rewind amount). Then in a step S2, there is preset a value T0 anterior to the time code Tr of the reference time code generator 12 by the sum of tc (rewind amount) + DL (offset amount). The offset DL is set to an initial value as "5" for example. Subsequently the VTR is started in a step S3.

In next steps S4 and S5, the reference time code tr is counted up frame by frame until arrival at the instant T1 or Tr-tc+tk. In this chart, tk denotes the time width required for the tape in the reproducing VTR to rise to a normal steady speed, and it is given a fixed value such as "6" for example in figure 2.

Upon arrival of the reference time code at the instant T1, the tape speed is controlled for phase modification in such a manner that the time remaining Tp-tp until the target point Tp of the reproducing VTR becomes equal to the remaining time Tr-tr until the target point Tr of the reference time code.

Simultaneously, in a step S6, a calculation is executed to obtain the difference ΔT, which should be zero fundamentally, appears as an inherent error of the rise delay due to some variations in the VTR. Therefore, such difference is corrected by adding the initial value of the offset amount DL (or delay cancel amount).

The offset amount DL thus corrected is stored in the memory 15 and is used for the next editing operation so as to cancel the inherent error ΔT. Accordingly, a learning routine is so prepared as to substantially equalise the respective remaining times mutually at the instant T1 that the tape reaches the normal steady state speed, whereby the phase modification until the target point posterior to the instant T1 can be performed in a short period of time.

In the step S6, it is preferred that the offset DL be corrected by determining the inherent error of the rise delay on the basis of the average of plural values relative to the difference ΔT between the respective remaining times Tp-tp and Tr-tr of the reproduced time code and the reference time code. Since the rise delay is different depending also on the tape length (reel diameter) or the tape speed (double speed, triple speed and so forth), a plurality of offset amounts DL may be previously stored and the appropriate one of them may be selected in accordance with individual requirements.

In an arrangement where the polarity of the difference ΔT is detected and the offset amount DL is weighted for correction by +1, -1 or more correspondingly to the detected polarity, the inherent error is accumulated after repetition of such operation, so that it becomes possible to eliminate any random delay time dependent on the tape reproducing position to consequently obtain an offset amount DL approximate to the actual value.

According to the above described process, despite any inherent variation or secular change existent in the drive mechanism of the video tape recorder or reproducer with regard to the tape-speed rise delay, proper tape control is achievable through learning the delay without being affected by such variations and so forth, whereby coincidence is attained, at the instant of the tape speed rise, between the remaining times of the reproduced time code and the reference time code until the respective targets. Consequently, desired synchronisation can be carried out with remarkable facility for the reproduced and reference time codes after rise of the tape speed. Thus, even if the tape rewind amount is reduced to the minimum necessary, which the controller 9 can be programmed to do, the required synchronism is still attainable without any impediment before arrival at the target point, hence enhancing the temporal efficiency and certainty in the synchronising operation.

## Claims

1. A tape synchronising apparatus for a tape reproducer which uses a tape having information signals and time code signals tp recorded thereon and is adapted to reproduce said information signals and time code signals tp from said tape, said apparatus comprising:
means for generating and storing a first time code Tp corresponding to the time code recorded at the position of an edit point after which the reproduced information signal becomes effective;
means (9, 3) for rewinding said tape to a pre-roll-point advanced from said edit point by a predetermined amount tc;
means (9) for generating a reference time code tr incremented in accordance with a reference time;
means (9, 15) for generating and storing a first reference time code Tr representative of said edit-point;
means (9) for presetting said reference time code generating means to a second reference time code To advanced from said first reference time code Tr;
means (9) for calculating, at an instant (T1), the time difference ΔT, between a first remaining time Tp-tp, which is existent from the read time code tp at said instant to the first time code Tp corresponding to said edit-point, and a second remaining time Tr-tr existent from the reference time code tr generated by said reference time code generating means at said instant to said first reference time code Tr; and
means (9) for executing tape speed control in response to said time difference ΔT; characterised in that
said second reference time code To is advanced from said first reference time code Tr by the sum of the time corresponding to said predetermined amount tc and an offset amount (DL); in that
said instant (T1) at which said time difference ΔT is calculated is after the tape speed becomes constant; and by further comprising;
means (9) for correcting said offset amount (DL) in response to the time difference ΔT generated from said calculating means.

2. A tape synchronising apparatus according to claim 1, and which is arranged such that a recording of said reproduced information signals by a tape recorder is started at said edit point.

3. A tape synchronising apparatus according to claim 1 or 2 and which is arranged such that wherein a broadcasting of said reproduced information signals is started at said edit point.

4. A tape synchronising apparatus according to any one of claims 1, 2 or 3, wherein said calculating means (9) include means for averaging a plurality of the time differences ΔT in a plurality of synchronising operations.

5. A tape editing system comprising, in combination, a tape synchronising apparatus according to any one of claims 1 to 4 and a pair of tape machines arranged to be controlled by that apparatus, one of the tape machines being operative to reproduce a required recorded segment from a tape (1) on that machine and the other of the tape machines being operative to record that recorded segment on a tape (4) thereon, the tape synchronising apparatus being operative to bring the two tape machines to an edit point at the start of the recorded segment in synchronism with one another.

6. A tape synchronising method for a tape reproducer which uses a tape having information signals and time code signals tp recorded thereon and is adapted to reproduce said information signals and time code signals from said tape, said method comprising the steps of:
generating and storing a first time code Tp corresponding to the time code recorded at the position of an edit point after which the reproduced information signal becomes effective;
rewinding the tape to a pre-roll-point advanced from said edit point by a predetermined amount tc;
generating a reference time code tr incremented in accordance with a reference time;
generating and storing a first reference time code corresponding to said edit point;
presetting the generation of said reference time code to a second reference time code To advanced from said first reference time code Tr;
calculating, at an instant (T1) the time difference ΔT between a first remaining time Tp-tp, which is existent from the read time code tp at said instant to the first time code Tp corresponding to said edit point, and a second remaining time Tr-tr existent from the reference time code tr generated at said instant to said first reference time code Tr; and
executing tape speed control in response to said time difference ΔT; characterised in that
said second reference time code To is advanced from said first reference time code Tr by the sum of the time corresponding to said predetermined amount tc and an offset amount (DL); in that
the time difference ΔT is calculated at an instant (T1) after the tape speed becomes constant; and by further comprising
correcting said offset amount (DL) in response to the time difference ΔT generated in said calculating step.

## Patentansprüche

1. Bandsynchronisierungsvorrichtung für ein Bandwiedergabegerät, welches ein Band mit darauf aufgezeichneten Informationssignalen und Zeitcodesignalen tp benutzt und angewendet wird, um die Informationssignale und die Zeitcodesignale tp von diesem Band wiederzugeben, wobei die Vorrichtung umfaßt:
Mittel zum Erzeugen und Speichern eines ersten Zeitcodes Tp entsprechend dem an der Position eines Editierpunkts aufgezeichneten Zeitcode, nach welchem das wiedergegebene Informationssignal wirksam wird;
Mittel (9, 3) zum Zurückspulen des Bands zu einem Vorlauf-Punkt, der gegenüber dem Editierpunkt um einen vorgegebenen Betrag tc vorverlegt ist;
Mittel (9) zum Erzeugen eines Referenzzeitcodes tr, welcher in Übereinstimmung mit einer Referenzzeit inkrementiert wird;
Mittel (9, 15) zum Erzeugen und Speichern eines ersten Referenzzeitcodes Tr, welcher repräsentativ für den Editierpunkt ist;
Mittel zum Voreinstellen der den Referenzzeitcode erzeugenden Mittel auf einen zweiten Referenzzeitcode To, welcher gegenüber dem ersten Referenzzeitcode Tr vorverlegt ist;
Mittel (9) zum Berechnen der Zeitdifferenz ΔT zu einem Zeitpunkt (T1) zwischen einer ersten verbleibenden Zeitdauer Tp-tp, welche zu diesem Zeitpunkt von dem ausgelesenen Zeitcode tp bis zu dem ersten dem Editierpunkt entsprechenden Zeitcode Tp reicht, und einer zweiten verbleibenden Zeitdauer Tr-tr, welche zu diesem Zeitpunkt von dem durch die Mittel zum Erzeugen des Referenzzeitcodes erzeugten Referenzzeitcode tr bis zu dem ersten Referenzzeitcode Tr reicht; und
Mittel (9) zum Durchführen einer Geschwindigkeitssteuerung als Reaktion auf die Zeitdifferenz ΔT, dadurch gekennzeichnet,
daß der zweite Referenzzeitcode To gegenüber dem ersten Referenzzeitcode Tr um die Summe der Zeit, welche dem vorgegebenen Betrag tc und einem Offset-Betrag (DL) entspricht, vorverlegt ist;
daß der Zeitpunkt (T1), an welchem die Zeitdifferenz ΔT berechnet wird, vorliegt, nachdem die Bandgeschwindigkeit konstant ist; und daß die Vorrichtung weiterhin umfaßt:
Mittel (9) zum Korrigieren des Offset-Betrags (DL) als Reaktion auf die von den Berechnungsmitteln erzeugte Zeitdifferenz ΔT.

2. Bandsynchronisierungsvorrichtung nach Anspruch 1, welche zusätzlich derart eingerichtet ist, daß eine Aufzeichnung der wiedergegebenen Informationssignale durch den Bandrekorder an dem Editierpunkt gestartet wird.

3. Bandsynchronisierungsvorrichtung nach Anspruch 1 oder 2, welche zusätzlich derart eingerichtet ist, daß bei dieser eine Rundfunkübertragung der wiedergegebenen Informationssignale an dem Editierpunkt gestartet wird.

4. Bandsynchronisierungsvorrichtung nach einem der Ansprüche 1, 2 oder 3, bei welcher die Berechnungsmittel (9) Mittel zur Mittelwertbildung einer Vielzahl von Zeitdifferenzen ΔT für eine Vielzahl von Synchronisierungsvorgängen enthalten.

5. Bandeditiersystem, welches eine Kombination aus einer Bandsynchronisierungsvorrichtung nach einem der Ansprüche 1 bis 4 und einem Paar von Bandmaschinen umfaßt, welche eingerichtet sind, um durch die Vorrichtung gesteuert zu werden, wobei eine der Bandmaschinen wirksam ist, um einen verlangten aufgezeichneten Abschnitt von einem Band (1) auf dieser Maschine wiederzugeben, und die andere der Bandmaschinen wirksam ist, um den aufgezeichneten Abschnitt auf einem Band (4) aufzuzeichnen, wobei die Bandsynchronisierungsvorrichtung wirksam ist, die zwei Bandmaschinen an einem Editierpunkt am Beginn des aufgezeichneten Abschnitts miteinander zu synchronisieren.

6. Bandsynchronisierungsverfahren für ein Bandwiedergabegerät, welches ein Band mit darauf aufgezeichneten Informationssignalen und Zeitcodesignalen tp benutzt und angewendet wird, um die Informationssignale und die Zeitcodesignale tp von diesem Band wiederzugeben, wobei das Verfahren folgende Schritte umfaßt:
Erzeugen und Speichern eines ersten Zeitcodes Tp entsprechend dem an der Position eines Editierpunkts aufgezeichneten Zeitcode, nach welchem das wiedergegebene Informationssignal wirksam wird;
Zurückspulen des Bands zu einem Vorlauf-Punkt, der gegenüber dem Editierpunkt um einen vorgegebenen Betrag tc vorverlegt ist;
Erzeugen eines Referenzzeitcodes tr, welcher in Übereinstimmung mit einer Referenzzeit inkrementiert wird;
Erzeugen und Speichern eines ersten Referenzzeitcodes Tr, welcher dem Editierpunkt entspricht;
Voreinstellen der Erzeugung des Referenzzeitcodes auf einen zweiten Referenzzeitcode To, welcher gegenüber dem ersten Referenzzeitcode Tr vorverlegt ist;
Berechnen der Zeitdifferenz ΔT zu einem Zeitpunkt (T1) zwischen einer ersten verbleibenden Zeitdauer Tp-tp, welche zu diesem Zeitpunkt von dem ausgelesenen Zeitcode tp bis zu dem ersten dem Editierpunkt entsprechenden Zeitcode Tp reicht, und einer zweiten verbleibenden Zeitdauer Tr-tr , welche von dem zu diesem Zeitpunkt erzeugten Referenzzeitcode tr bis zu dem ersten Referenzzeitcode Tr reicht; und
Durchführen einer Geschwindigkeitssteuerung als Reaktion auf die Zeitdifferenz ΔT, **dadurch gekennzeichnet**,
daß der zweite Referenzzeitcode To gegenüber dem ersten Referenzzeitcode Tr um die Summe der Zeit, welche dem vorgegebenen Betrag tc und einem Offset-Betrag (DL) entspricht, vorverlegt wird;
daß die Zeitdifferenz ΔT zu einem Zeitpunkt (T1) berechnet wird, nachdem die Bandgeschwindigkeit konstant ist; und daß das Verfahren weiterhin umfaßt:
Korrigieren des Offset-Betrags (DL) als Reaktion auf die von den Berechnungsmitteln erzeugte Zeitdifferenz ΔT.

## Revendications

1. Appareil de synchronisation de bande pour un reproducteur de bande qui utilise une bande ayant des signaux d'informations et des signaux de code de temps tp enregistrés sur celle-ci et est adapté pour reproduire lesdits signaux d'informations et lesdits signaux de code de temps tp à partir de ladite bande, ledit appareil comprenant :
un dispositif pour générer et stocker un premier code de temps Tp correspondant au code de temps enregistré à la position du point de montage après lequel le signal d'informations reproduit devient efficace ;
un dispositif (9, 3) pour rembobiner ladite bande en un point de pré-enroulement avancé à partir dudit point de montage d'une quantité prédéterminée tc ;
un dispositif (9) pour générer un code de temps de référence tr augmenté d'un incrément en fonction d'un temps de référence ;
un dispositif (9, 15) pour générer et stocker un premier code de temps de référence Tr représentatif dudit point de montage ;
un dispositif (9) pour pré-régler ledit dispositif de génération de code de temps de référence à un second code de temps de référence To avancé à partir dudit premier code de temps de référence Tr ;
un dispositif (9) pour calculer, à un instant (T1), la différence de temps ΔT, entre une première durée restante Tp-tp, qui est existante à partir du code de temps lu tp audit instant jusqu'au premier code de temps Tp correspondant audit point de montage, et une seconde durée restante Tr-tr existante à partir du code de temps de référence Tt généré par ledit dispositif de génération de code de temps de référence audit instant jusqu'audit premier code de temps de référence Tr ; et
un dispositif (9) pour exécuter une commande de vitesse de bande en réponse à ladite différence de temps ΔT; caractérisé en ce que
ledit second code de temps de référence To est avancé par rapport audit premier code de temps de référence Tr de la somme du temps correspondant à ladite quantité prédéterminée tc et d'une quantité de décalage (DL) ; en ce que
ledit instant (T1) auquel ladite différence de temps ΔT est calculée est après que la vitesse de la bande soit devenue constante ; et comprenant en outre ;
un dispositif (9) pour corriger ladite quantité de décalage (DL) en réponse à la différence de temps ΔT générée par ledit dispositif de calcul.

2. Appareil de synchronisation de bande selon la revendication 1, et qui est disposé de telle sorte qu'un enregistrement desdits signaux d'informations reproduits par un enregistreur de bande commence audit point de montage.

3. Appareil de synchronisation de bande selon la revendication 1 ou 2 et qui est disposé de telle sorte qu'une diffusion desdits signaux d'informations reproduits commence audit point de montage.

4. Appareil de synchronisation de bande selon l'une quelconque des revendications 1, 2 ou 3, dans lequel ledit dispositif de calcul (9) comprend un dispositif pour calculer une moyenne d'une pluralité de différences de temps ΔT dans une pluralité d'opérations de synchronisation.

5. Système de montage de bande comprenant, en combinaison, un appareil de synchronisation de bande selon l'une quelconque des revendications 1 à 4 et une paire de machines de bande disposées pour être commandées par cet appareil, une des machines de bande étant fonctionnelle pour reproduire un segment enregistré nécessaire à partir d'une bande (1) sur cette machine et l'autre des machines de bande étant fonctionnelle pour enregistrer ce segment enregistré sur une bande (4) sur celle-ci, l'appareil de synchronisation de bande étant fonctionnel pour mettre les deux machines de bande en un point de montage au début du segment enregistré en synchronisme l'une avec l'autre.

6. Procédé de synchronisation de bande pour un reproducteur de bande qui utilise une bande ayant des signaux d'informations et des signaux de code de temps tp enregistrés sur celle-ci et est adapté pour reproduire lesdits signaux d'informations et lesdits signaux de code de temps à partir de ladite bande, ledit procédé comprenant les étapes de :
génération et stockage d'un premier code de temps Tp correspondant au code de temps enregistré à la position d'un point de montage après lequel le signal d'informations reproduit devient efficace ;
rembobinage de la bande en un point de pré-enroulement avancé à partir dudit point de montage d'une quantité prédéterminée tc ;
génération d'un code de temps de référence tr augmenté d'un incrément selon un temps de référence ;
génération et stockage d'un premier code de temps de référence correspondant audit point de montage ;
préréglage de la génération dudit code de temps de référence en un second code de temps de référence To avancé à partir dudit premier code de temps de référence Tr ;
calcul, à un instant (T1) de la différence de temps ΔT entre une première durée restante Tp-tp, qui est existante à partir du code de temps lu Tp audit instant jusqu'au premier code de temps Tp correspondant audit point de montage, et une seconde durée restante Tr-tr existant à partir du code de temps de référence tr généré audit instant jusqu'audit premier code de temps de référence Tr ; et
exécution d'une commande de vitesse de bande en réponse à ladite différence de temps ΔT ; caractérisé en ce que
ledit second code de temps de référence To est avancé à partir dudit premier code de temps de référence Tr de la somme du temps correspondant à ladite quantité prédéterminée tc et d'une quantité de décalage (DL) ; en ce que
la différence de temps ΔT est calculée à un instant (T1) après que la vitesse de bande devienne constante ; et comprenant de plus
une correction de ladite quantité de décalage (DL) en réponse à la différence de temps ΔT générée dans ladite étape de calcul.
